# EUROPEAN PATENT APPLICATION

(11) **EP 0 637 597 A1**
(43) Date of publication of application: **08.02.1995**
(21) Application number: 94202242.7
(22) Date of filing: 01.08.1994
(51) Int. Cl.: C08F 218/16, G02B 1/04

(54) **Articles of high refractive index, polymerizable liquid compositions and a method for their preparation**

(30) Priority: 06.08.1993 IT MI931791
(71) Applicant: GREAT LAKES CHEMICAL ITALIA S.r.l., I-20138 Milano (IT)
(72) Inventor: Greco, Alberto, I-20070 Dresano (Milano) (IT); Girelli, Daniele, I-20131 Milano (IT); Gagliardi, Claudio, I-20097 San Donato Milanese (Milano) (IT)
(74) Representative: Fusina, Gerolamo

(57) **Abstract**

Radically polymerizable liquid compositions consisting essentially of compounds containing allylester groups, comprising:
A) a resin containing at least two allylester groups of general formula (I): 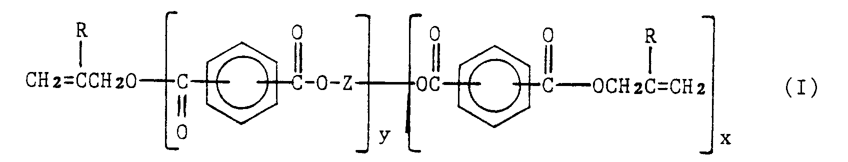
B) a diallylester of general formula (II): 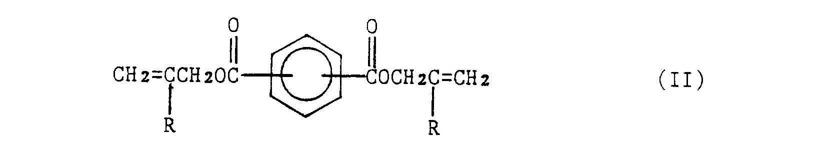
C) a whitening agent;
D) a radical polymerization initiator;
E) optionally, reactive monomers or diluents.

## Description

This invention relates to liquid compositions essentially consisting of compounds containing allylester groups, which can be crosslinked into articles of high refractive index.

More particularly, the invention relates to radically polymerizable liquid compositions essentially consisting of compounds containing allylester groups and the articles of high refractive index obtained by crosslinking said compositions.

The invention further relates to a process for preparing the constituent allylesters of said liquid compositions.

High refractive index resins prepared by polymerizing di(meth)allylesters of arylcarboxylic acids are known in the state of the art.

Published Japanese patent application JP 61144601 claims resins prepared by homopolymerization of dimethallyl phthalate, which however can be easily scratched and have a refractive index not greater than 1.56.

Published Japanese patent application JP 03134005 and European patent EP 209124 claim resins prepared by polymerizing compounds having the following structures: 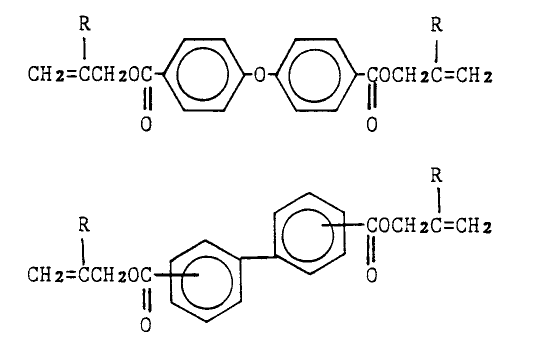
Although these resins have a high refractive index, they present coloration problems and less than optimum mechanical characteristics.

Published Japanese patent applications JP 59191708, JP 6061212, JP 61127713, JP 61183306 and European patent EP 154136 claim resins based on diallyl phthalate or dimethallyl phthalate mixed with derivatives of (meth)acrylic type. However these resins have a refractive index not greater than 1.56 and sometimes have mediocre mechanical characteristics.

Other resins based on diallyl phthalate oligomers mixed with diethyleneglycol bis allyl carbonate, known by the name of CR 39 of PPG Industries Inc. or RAV 7 of Enichem Synthesis, are claimed in Japanese patent applications JP 0354213 and JP 03199218, but these resins also have a maximum refractive index of 1.56 and present coloration problems.

The present applicant has now discovered new liquid compositions essentially consisting of compounds containing allylester groups, which are able to provide by crosslinkage articles having a high refractive index, n_{D}²⁰, of between 1.57 and 1.60 and to overcome the drawbacks of the known art.

Consequently the present invention provides radically polymerizable liquid compositions consisting essentially of compounds containing allylester groups, comprising:
A) a resin containing at least two allylester groups of general formula (I): 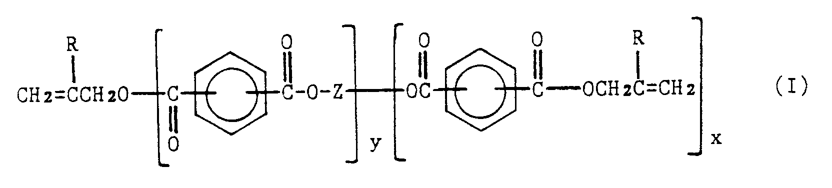 where:
   - R represents a hydrogen atom or a methyl;
   - Z represents a C₂-C₃₃ organic radical of alkyl, cycloalkyl, arylalkyl or diol- or triol-derived aryloxyalkyl type, which can contain from 1 to 8 oxygen atoms and/or from 2 to 3 nitrogen atoms and/or from 1 to 3 sulphur atoms and/or from 2 to 4 halogen atoms chosen from chlorine, bromine, fluorine and iodine;
   - x represents a whole number between 1 and 3;
   - y represents a whole number between 1 and 6 if x is equal to 1, and is 1 if x is equal to 2 or 3;
B) a diallylester of general formula (II): 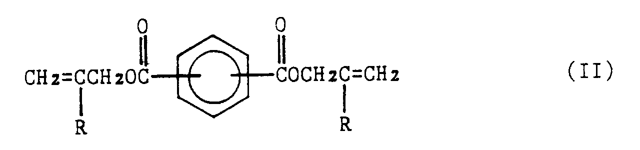 where R has the aforesaid meaning:
C) a whitening agent;
D) a radical polymerization initiator;
E) optionally, reactive monomers or diluents.

The substituents in the aromatic nucleus of the resin of general formula (I) can be in the ortho, meta or para position.

Examples of resins of general formula (I) of the present invention are those in which:
- Z represents an organic radical of general formula: 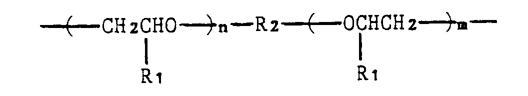
- R and R₁, equal or different, represent a hydrogen atom or a methyl;
- R₂ represents a C₆-C₂₇ organic radical containing at least one aromatic nucleus, which can contain from 2 to 4 atoms of halogen such as chlorine, bromine, fluorine or iodine; or an organic radical containing heteroatoms chosen from nitrogen, oxygen and sulphur;
- n and m, equal or different, represent a whole number between 1 and 6;
- y represents a whole number between 1 and 6;
- x is 1;
and, preferably, those in which R₂ represents an organic radical of general formula (III): 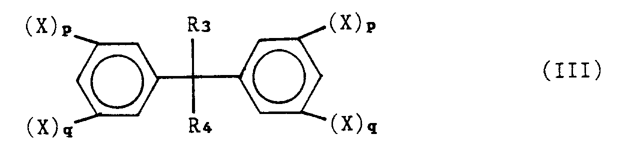
where: R₃ represents a hydrogen atom, a methyl or a phenyl, R₄ represents a hydrogen atom or a methyl, X represents a hydrogen atom, a methyl, a phenyl or a halogen such as chlorine, bromine, fluorine or iodine, and q and p, equal or different, are 0 or 1; or those in which:
- Z represents an organic radical of general formula (IV): 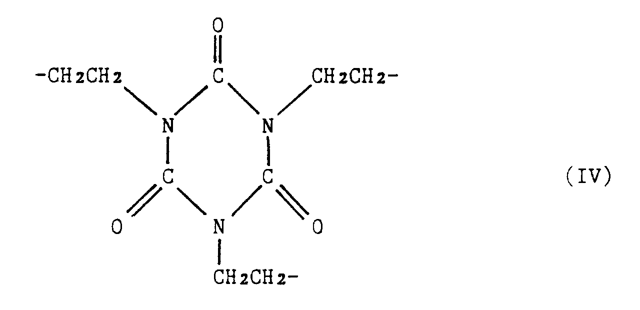
- R represents a hydrogen atom or a methyl;
- y is 1;
- x is 2.

Preferred examples of diallylesters B) of general formula (II) are, for example, diallyl terephthalate, diallyl phthalate, diallyl isophthalate etc.

Examples of whitening agents C) are, for example, ethylene glycol, allylglycidylether etc. (compounds claimed in Italian patent application IT 21327 A/90 in the name of the present applicant)
Examples of radical polymerization initiators D) are peroxides of the perester class such as t-butylperoxy-2-ethylhexanoate, of the percarbonate class such as diisopropylpercarbonate, dicyclohexylpercarbonate or of the perketal class such as 1,1-bis-(tert.butylperoxy)-3,3,5-trimethylcyclohexane.

As an alternative to peroxides, diazoderivatives such as azobisisobutyronitrile, azobisisovaleronitrile etc. can be used.

The reactive monomers or diluents E), which are chosen from the acrylate and/or methacrylate class, the allylcarbonate class or the (meth)allylester class, can be mono or bifunctional, and are characterised by being fluid at temperatures higher than 20°C.

Examples of reactive monomers or diluents E) pertaining to the acrylate and/or methacrylate class can be represented by the following general formulas (V), (VI), (VII), (VIII) and (IX): 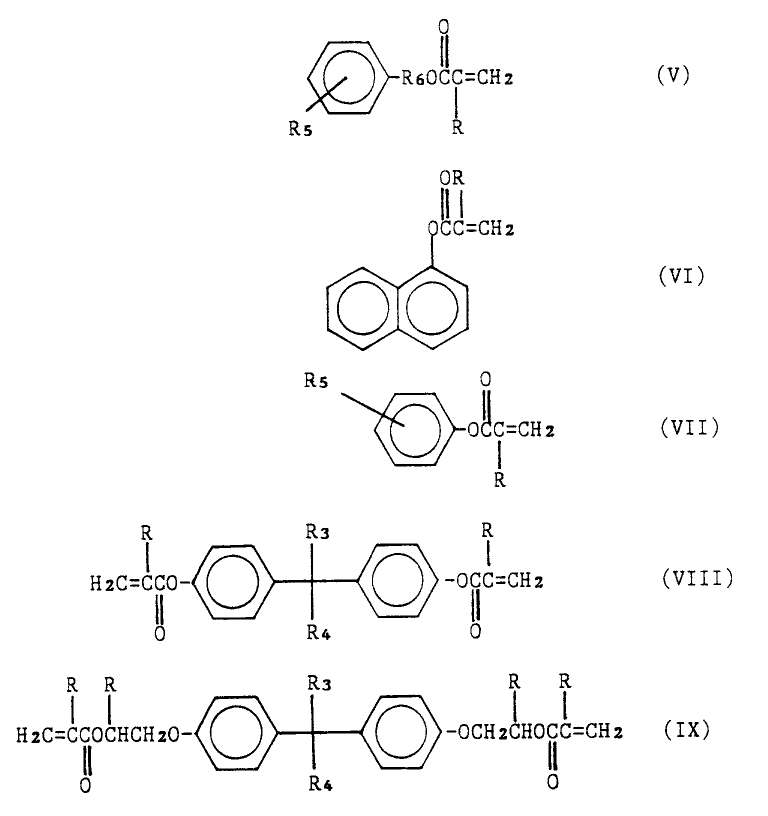
where:
- R₅ represents a phenyl or phenoxy radical, a methoxy radical or a halogen atom such as chlorine or bromine;
- R₆ represents CH₂, CH₂CH₂, OCH₂CH₂;
- R, R₃ and R₄ have the aforesaid meaning.

Examples of reactive monomers or diluents E) pertaining to the allylcarbonate or (meth)allylester classes can be represented by the following general formulas (XI) and (XII): 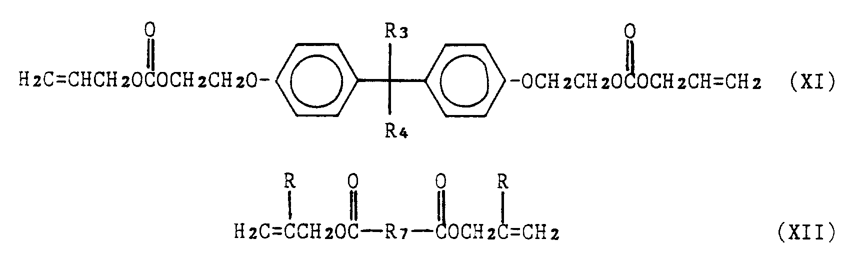
where:
- R, R₃ and R₄ have the aforesaid meanings;
- R₇ represents a C₂-C₆ organic radical.

Further reactive monomers or diluents (E) can be chosen from triallyl-, trimethallyl-, triazine or triisocyanurates.

The liquid compositions of the present invention comprise the following weight ratios:
A) 10%-60%;
B) 90%-40%;
E) 10%-30% (if present);
to which are added 0.01%-5% of component 0) and 0.1%-8% of component D) [the percentage of C) and D) is calculated on the mixture of A), B) and E)]. Preferably component D) is added to the extent of 0.01%-5% in the case of peroxides and 0.01%-0.5% in the case of diazo derivatives.

Smaller quantities of other additives F) can be added to the liquid compositions of the present invention, such as detaching agents, stabilizers, antioxidants, U.V. adsorbers, dyes and photochromatic compounds. Their proportion never exceeds 2 wt% on the mixture of A), B) and E).

The present invention further relates to a process for preparing the resin A) of general formula (I).

The process for preparing the resin A) of general formula (I) comprises reacting a compound of general formula (XIII):

HO―Z―OH (XIII)

where Z has the aforesaid meaning, with a diallylester of the aforesaid general formula (II), in a (II)/(XIII) molar ratio of between 4 and 20, in the presence of a transesterification catalyst chosen from organometal compounds such as titanium alcoholates (titanium isopropylate, etc.), tin or lead derivatives (tin oxide, tin chloride etc.), mercury derivatives (mercury acetate etc.), or alkaline metal compounds (sodium methylate, potassium tert.butylate etc.). The transesterification catalysts are present in the reaction in a quantity of between 0.0001% and 3%. This reaction is generally conducted in a time of between 2 and 6 hours, at a temperature of between 60°C and 220°C.

After eliminating the allyl alcohol, corresponding to the OH equivalents of the diallylester of general formula (II), by operating under partial vacuum at a minimum pressure of 100 mmHg and a temperature of between 80°C and 180°C for a time of between 30 minutes and 8 hours, the catalyst is neutralized by the action of a sequestering agent such as Tonsil earth, followed by filtration. A part of the compound of general formula (II) is then removed under vacuum at a temperature of between 100°C and 160°C until the concentrations of the resin A) of general formula (I) and of the diallylester B) of general formula (II) satisfy the aforesaid A/B weight ratio.

The diallylester B) is removed either by distillation under vacuum or, preferably, by liquid film evaporation. This method is very important when wishing to obtain a concentration of the resin A) in the liquid composition of the present invention of between 20 wt% and 60 wt%.

The whitening agents C), the radical polymerization initiators D) and, optionally, the reactive monomers or diluents E) and the other additives F) are then added to the liquid composition obtained in this manner, such as to obtain a liquid composition with the following characteristics:
- colour: APHA < 10;
- viscosity: 30-500 cps (25°C);
- storage stability: > 6 months (25°C);
- odourless.

In accordance with the aforegoing, according to a preferred embodiment the liquid composition of the present invention comprises:
A) 20-60 wt% of a resin with the following formula (Ia): 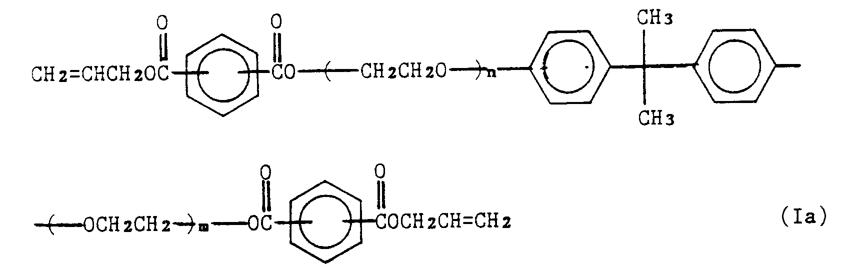 where n and m, equal or different, are 1 or 2.
B) 80-40 wt% of a diallylester with the following formula (IIa): 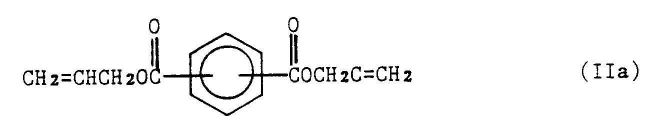 where the two allylester groups can be in the ortho, meta or para position (the isomers of formula (IIa) can be present in the composition either alone or mixed);
C) 0.01-2 wt% of ethylene glycol or allylglycidylether, either alone or mixed;
D) 0.01-6 wt% of a percarbonate, a perester or a perketal;
E) 5-20 wt% of a reactive monomer or diluent chosen from benzyl(meth)acrylate, phenoxyethyl(meth)acrylate, phenoxybenzyl (meth)acrylate, chlorobenzyl(meth)acrylate, phenoxy(meth)acrylate and naphthyloxy(meth)acrylate, either alone or mixed.

The described resin (Ia) is prepared by reacting the compound of formula (XIIIa): 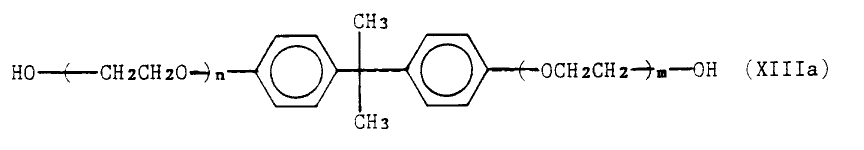
where n and m, equal or different, are 1 or 2, with the aforesaid diallylester of formula (IIa), the isomers of which can be present either alone or mixed, in a (IIa)/(XIIIa) molar ratio of between 6 and 16, in the presence of a organometal catalyst chosen preferably from titanium, tin and zinc compounds in a quantity of 0.0001-0.05 wt% in the liquid composition. The reaction is prolonged for the time required for the formation and collection of the allyl alcohol corresponding to the OH equivalents of the diallylester of formula (IIa), operating under partial vacuum at a pressure of 100 mmHg and a temperature of between 80°C and 180°C for a time of between 30 minutes and 8 hours.

After neutralizing the catalyst, the diallylester of formula (IIa) is eliminated using a liquid film evaporator operating preferably under vacuum at a pressure of between 20 and 0.001 mmHg and a temperature of between 80°C and 160°C, until the concentration of the resin (Ia) falls within the preferred weight percentage range (25-60 wt%).

After cooling to ambient temperature, the aforedescribed liquid composition is completed by adding component C) and, optionally, components E) and F).

The liquid composition obtained in this manner is crosslinked by an oven-heating cycle at a temperature of less than 100°C for a time of between 12 and 24 hours.

The present invention also relates to articles of high refractive index obtained by thermal crosslinking of said compositions. These articles also have excellent mechanical properties.

For this purpose the liquid compositions of the present invention are poured into a solid mould, generally of glass, the shape and dimensions of which vary according to the form of the final desired article.

The liquid compositions of the present invention harden thermally within a time variable between 4 and 48 hours, at a temperature of between 20°C and 150°C.

The cross linking of said liquid compositions to give articles of high refractive index generally takes place in two separate stages.

During the first stage, the liquid to be crosslinked is heated in the mould having the shape of the article to be obtained to a temperature which is lower by a few tens of degrees than that corresponding to a 10 hour half life of the radical initiator.

The composition is maintained at this temperature for a time varying between 5 and 15 hours.

During the second stage the composition to be crosslinked is maintained at a temperature of 30-50°C higher than that of the first stage for a time varying between 1 and 6 hours.

Crosslinking of the said compositions is retarded by the presence of oxygen, hence correct hardening of the formulations requires the absence of air.

Some illustrative but non-limiting examples are given hereinafter in order to better understand the present invention and enable it to be implemented.

Colour (APHA) is determined by a Lovibond 2000 colorimeter (ASTM D1209).

The refractive index n_{D}²⁰ and the value of z corresponding to the dispersion factor are determined by an Abbe refractometer (ASTM D524).

Rockwell hardness is measured by a Rockwell durometer(ASTM D785). Light transmission is determined by a Gardner Hazegard XL211 (ASTM D1003).

Viscosity is determined by a Cannon Fenske capillary viscometer (ASTM D2515 or ISO/DIS 3105).

### EXAMPLE 1

123 g (0.5 moles) of diallyl terephthalate (DATP) and 15.8 g (0.05 moles) of bisphenol A diethoxylate (BPHE) are introduced into a three-neck 250 ml flask fitted with a thermometer, gas-inlet Claisen and magnetic stirrer. 50 mg of dibutyltin oxide (SnDBO) catalyst, 10 mg of tert.butylcatechol and 10 mg of hydroquinone monomethylether (HQMME) are added.

The resultant mixture, maintained under reduced pressure (5-6 mmHg) and under agitation, is heated to 140°C over 2 hours, it is left at this temperature for 1 hour and is then heated to 160°C over 1 hour.

After recovering the theoretical allyl alcohol, the mixture is allowed to cool to ambient temperature while adding 1 wt% of Tonsil earth under agitation. The system is filtered through a porous baffle with a celite panel.

A colourless liquid solution is obtained, with a theoretical resin content of 26.6%, a refractive index n_{D}²⁰ of 1.54 and a viscosity of 50 cps (25°C).

The liquid solution is cooled to ambient temperature and 5 wt% of dicyclohexylpercarbonate (CHPC) are added.

The liquid solution is then degassed, transferred into a suitable mould composed of two glass plates separated by a plasticized polyvinylchloride (PVC) gasket of 2 mm thickness and crosslinked by the following oven-heating cycle: at 40°C for 3 hours, from 40°C to 50°C over 7 hours, from 50°C to 80°C over 9 hours, and at 80°C for 1 hour.

In this manner a lens is obtained which is perfectly detachable from the mould, is colourless and transparent, and has the following characteristics:

| | |
|---|---|
| - Refractive index (n_{D}²⁰): | 1.5755 |
| - Dispersion factor (z): | 34.5 |
| - Rockwell hardness: | 114.0 |
| - Light transmission: | 89.5%. |

### EXAMPLE 2

Operating in the manner described in Example 1, 147 g (0.597 moles) of diallyl terephthalate (DATP) and 15.8 g (0.05 moles) of bisphenol A diethoxylate (BPHE) are reacted in the presence of 49 mg of dibutyltin oxide (SnDBO) catalyst, 10 mg of tert.butylcatechol and 10 mg of hydroquinone monomethylether (HQMME).

From the resultant mixture 77 g of diallyl terephthalate are removed operating with a liquid film evaporator at a temperature of 120°C under a reduced pressure of 0.2 mmHg.A colourless liquid solution is obtained with a theoretical resin content of 40%, a refractive index n_{D}²⁰ of 1.5465 and a viscosity of 144 cps (25°C). The liquid solution is cooled to ambient temperature and 4.5 wt% of dicyclohexylpercarbonate (CHPC) are added. The liquid solution is then degassed, transferred into a suitable mould composed of two glass plates separated by a plasticized polyvinylchloride (PVC) gasket of 2 mm thickness and crosslinked by the following oven-heating cycle: at 40°C for 3 hours, from 40°C to 50°C over 7 hours, from 50°C to 80°C over 9 hours, and at 80°C for 1 hour.

In this manner a lens is obtained which is perfectly detachable from the mould, is colourless and transparent, and has the following characteristics:

| | |
|---|---|
| - Refractive index (n_{D}²⁰): | 1.5785 |
| - Dispersion factor (z): | 34.0 |
| - Rockwell hardness: | 107.0 |
| - Light transmission: | 90.3%. |

### EXAMPLE 3

Operating in the manner described in Example 1, 71.8 g (0.292 moles) of diallyl terephthalate (DATP) and 10.8 g (0.029 moles) of bisphenol A diethoxylate (BPHE) are reacted in the presence of 30 mg of dibutyltin oxide (SnDBO) catalyst, 8 mg of tert.butylcatechol and 8 mg of hydroquinone monomethylether (HQMME).

From the resultant 71 g of liquid mixture, 16.5 g of diallyl terephthalate are removed by distillation at 165°C under vacuum at a reduced pressure of 0.05 mmHg.

A colourless liquid solution is obtained, with a theoretical resin content of 36%, a refractive index n_{D}²⁰ of 1.5497 and a viscosity of 131 cps (25°C).

The liquid solution is cooled to ambient temperature and 4.5 wt% of dicyclohexylpercarbonate (CHPC) are added.

The liquid solution is then degassed, transferred into a suitable mould composed of two glass plates separated by a plasticized polyvinylchloride (PVC) gasket of 2 mm thickness and crosslinked by the following oven-heating cycle: at 40°C for 3 hours, from 40°C to 50°C over 7 hours, from 50°C to 80°C over 9 hours, and at 80°C for 1 hour.

In this manner a lens is obtained which is perfectly detachable from the mould, is colourless and transparent, and has the following characteristics:

| | |
|---|---|
| - Refractive index (n_{D}²⁰): | 1.5828 |
| - Dispersion factor (z): | 34.0 |
| - Rockwell hardness: | 113.0 |
| - Light transmission: | 90.3%. |

### EXAMPLE 4

Operating in the manner described in Example 1, 132.8 g (0.54 moles) of diallyl terephthalate (DATP) and 7.83 g (0.03 moles) of tris hydroxyethyl isocyanurate are reacted in the presence of 30 mg of dibutyltin oxide (SnDBO) catalyst, 6 mg of tert.butylcatechol and 6 mg of hydroquinone monomethylether (HQMME).

From the resultant liquid mixture, 43 g of diallyl terephthalate are removed by distillation at 165°C under vacuum at a reduced pressure of 0.05 mmHg.

A colourless liquid solution is obtained, with a theoretical resin content of 29%, a refractive index n_{D}²⁰ of 1.5338 and a viscosity of 38 cps (25°C).

The liquid solution is cooled to ambient temperature and 4.5 wt% of dicyclohexylpercarbonate (CHPC) are added.

The liquid solution is then degassed, transferred into a suitable mould composed of two glass plates separated by a plasticized polyvinylchloride (PVC) gasket of 2 mm thickness and crosslinked by the following oven-heating cycle: at 40°C for 3 hours, from 40°C to 50°C over 7 hours, from 50°C to 80°C over 9 hours, and at 80°C for 1 hour.

In this manner a lens is obtained which is perfectly detachable from the mould, is colourless and transparent, and has the following characteristics:

| | |
|---|---|
| - Refractive index (n_{D}²⁰): | 1.5725 |
| - Dispersion factor (z): | 34.5 |
| - Rockwell hardness: | 121.0 |
| - Light transmission: | 88.4%. |

### EXAMPLE 5

Operating in the manner described in Example 1, 123.1 g (0.5 moles) of diallyl terephthalate (DATP) and 15.8 g (0.05 moles) of bisphenol A diethoxylate (BPHE) are reacted in the presence of 30 mg of dibutyltin oxide (SnDBO) catalyst, 10 mg of tert.butylcatechol and 10 mg of hydroquinone monomethylether (HQMME).

From the resultant liquid mixture, 61.5 g of diallyl terephthalate are removed by distillation at 165°C under vacuum at a reduced pressure of 0.05 mmHg.

A colourless liquid solution is obtained, with a theoretical resin content of 48.7%, to which 27.8 g of dimethallyl phthalate (DMAP) are added to obtain a solution with a theoretical resin content of 35%, a refractive index n_{D}²⁰ of 1.5405 and a viscosity of 110 cps (25°C).

The liquid solution is cooled to ambient temperature and 4.5 wt% of dicyclohexylpercarbonate (CHPC) are added.

The liquid solution is then degassed, transferred into a suitable mould composed of two glass plates separated by a plasticized polyvinylchloride (PVC) gasket of 2 mm thickness and crosslinked by the following oven-heating cycle: at 40°C for 3 hours, from 40°C to 50°C over 7 hours, from 50°C to 80°C over 9 hours, and at 80°C for 1 hour.

In this manner a lens is obtained which is perfectly detachable from the mould, is colourless and transparent, and has the following characteristics:

| | |
|---|---|
| - Refractive index (n_{D}²⁰): | 1.5757 |
| - Dispersion factor (z): | 35 |
| - Rockwell hardness: | 105.5 |
| - Light transmission: | 90.9%. |

## Claims

1. Radically polymerizable liquid compositions consisting essentially of compounds containing allylester groups, comprising:
A) a resin containing at least two allylester groups of general formula (I): 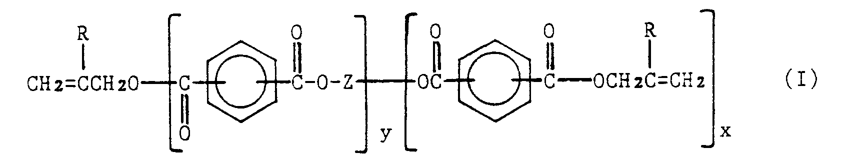 where:
- R represents a hydrogen atom or a methyl;
- Z represents a C₂-C₃₃ organic radical of alkyl, cycloalkyl, arylalkyl or diol- or triol-derived aryloxyalkyl type, which can contain from 1 to 8 oxygen atoms and/or from 2 to 3 nitrogen atoms and/or from 1 to 3 sulphur atoms and/or from 2 to 4 halogen atoms chosen from chlorine, bromine, fluorine and iodine;
- x represents a whole number between 1 and 3;
- y represents a whole number between 1 and 6 if x is equal to 1, and is 1 if x is equal to 2 or 3;
B) a diallylester of general formula (II): 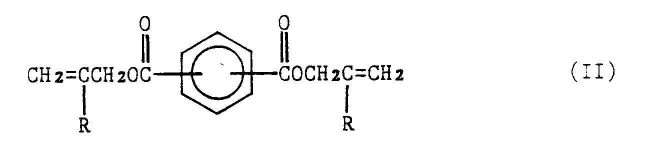 where R has the aforesaid meaning:
C) a whitening agent;
D) a radical polymerization initiator;
E) optionally, reactive monomers or diluents.

2. Liquid compositions as claimed in claim 1, wherein in the resin of general formula (I) Z represents an organic radical of general formula: 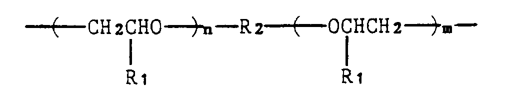
- R and R₁, equal or different, represent a hydrogen atom or a methyl;
- R₂ represents a C₆-C₂₇ organic radical containing at least one aromatic nucleus, which can contain from 2 to 4 atoms of halogen such as chlorine, bromine, fluorine or iodine; or an organic radical containing heteroatoms chosen from nitrogen, oxygen and sulphur;
- n and m, equal or different, represent a whole number between 1 and 6;
- y represents a whole number between 1 and 6;
- x is 1.

3. Liquid compositions as claimed in claim 1 or 2, wherein in the resin of general formula (I) Z represents an organic radical of general formula: 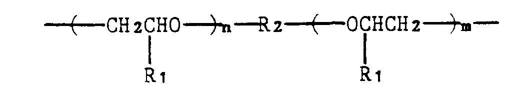
- R and R₁, equal or different, represent a hydrogen atom or a methyl;
- R₂ represents an organic radical of general formula (III): 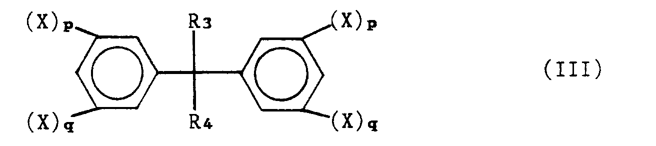 where: R₃ represents a hydrogen atom, a methyl or a phenyl, R₄ represents a hydrogen atom or a methyl, X represents a hydrogen atom, a methyl, a phenyl or a halogen such as chlorine, bromine, fluorine or iodine, and q and p, equal or different, are 0 or 1;
- n and m, equal or different, represent a whole number between 1 and 6;
- y represents a whole number between 1 and 6;
- x is 1.

4. Liquid compositions as claimed in claim 1, wherein in the resin of general formula (I) Z represents an organic radical of general formula (IV): 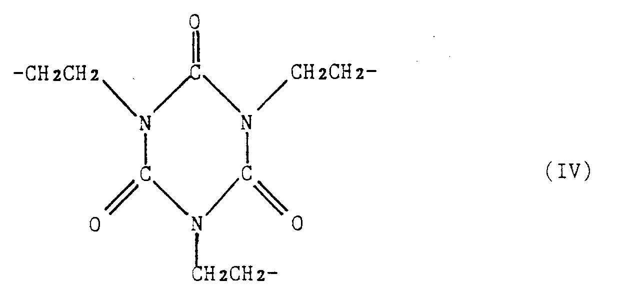
- R represents a hydrogen atom or a methyl;
- y is 1;
- x is 2.

5. Liquid compositions as claimed in any one of the preceding claims, wherein the diallyl esters B) of general formula (II) are diallyl terephthalate, diallyl phthalate or diallyl isophthalate.

6. Liquid compositions as claimed in any one of the preceding claims, wherein the whitening agents C) are ethylene glycol or allyl glycidylether.

7. Liquid compositions as claimed in any one of the preceding claims, wherein the radical polymerization initiators D) are peroxides of the perester class, of the percarbonate class or of the perketal class, or are diazo derivatives.

8. Liquid compositions as claimed in any one of the preceding claims, wherein the reactive monomers or diluents E) are chosen from the acrylate and/or methacrylate class, the allylcarbonate class or the (meth)allylester class.

9. Liquid compositions as claimed in claim 8, wherein the reactive monomers or diluents E) pertaining to the acrylate and/or methacrylate class can be represented by the following general formulas (V), (VI), (VII), (VIII) and (IX): 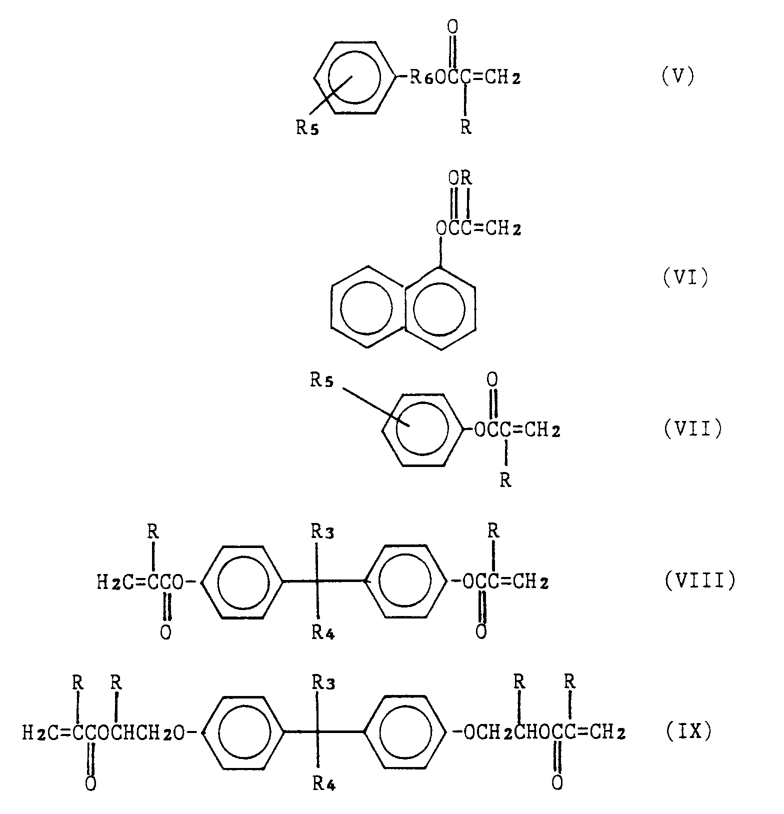 where:
- R₅ represents a phenyl or phenoxy radical, a methoxy radical or a halogen atom such as chlorine or bromine;
- R₆ represents CH₂, CH₂CH₂, OCH₂CH₂;
- R, R₃ and R₄ have the aforesaid meanings.

10. Liquid compositions as claimed in claim 8, wherein the reactive monomers or diluents E) pertaining to the allylcarbonate or (meth)allylester classes can be represented by the following general formulas (XI) and (XII): 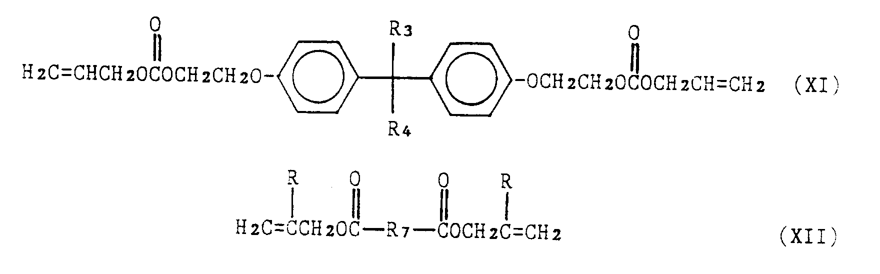 where:
- R, R₃ and R₄ have the aforesaid meanings;
- R₇ represents a C₂-C₆ organic radical.

11. Liquid compositions as claimed in any one of the preceding claims, consisting of compounds in accordance with the following weight ratios:
A) 10%-60%;
B) 90%-40%;
E) 10%-30% (if present);
to which 0.01%-5% of component C) and 0.1%-8% of component D) are added.

12. Liquid compositions as claimed in any one of the preceding claims, comprising detaching agents, stabilizers, antioxidants, U.V. adsorbers, dyes and photochromatic compounds in a quantity not exceeding 2%.

13. Liquid compositions as claimed in any one of the preceding claims, comprising:
A) 20-60 wt% of a resin with the following formula (Ia): 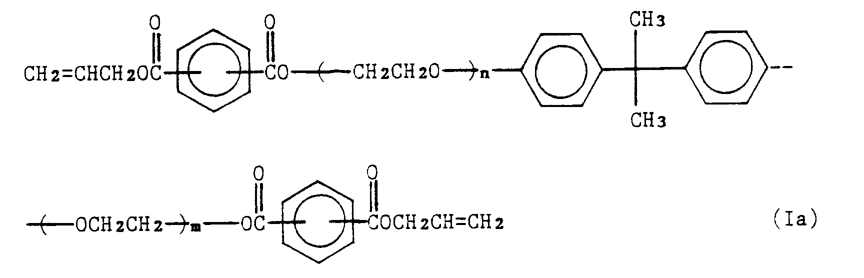 where n and m, equal or different, are 1 or 2.
B) 80-40 wt% of a diallylester with the following formula (IIa): 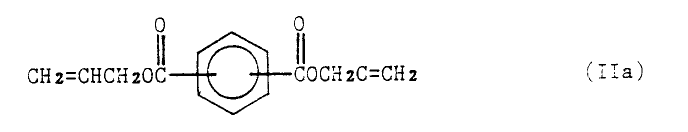 where the two allylester groups are in the ortho, meta or para position;
C) 0.01-2 wt% of ethylene glycol or allylglycidylether, either alone or mixed;
D) 0.01-6 wt% of a percarbonate, a perester or a perketal;
E) 5-20 wt% of a reactive monomer or diluent chosen from benzyl(meth)acrylate, phenoxyethyl(meth)acrylate, phenoxybenzyl (meth)acrylate, chlorobenzyl(meth)acrylate, phenoxy(meth)acrylate and naphthyloxy(meth)acrylate, either alone or mixed.

14. A process for preparing the resin A) of general formula (I), comprising reacting a compound of general formula (XIII):
HO―Z―OH (XIII)
where Z has the aforesaid meaning, with a diallylester of the aforesaid general formula (II), in a (II)/(XIII) molar ratio of between 4 and 20.

15. A process as claimed in claim 14, wherein the reaction is conducted in the presence of a transesterification catalyst chosen from organometal compounds or alkaline metal compounds, in a quantity of between 0.0001% and 3%.

16. A process as claimed in claim 14, wherein the reaction is generally effected in a time variable between 2 and 6 hours at a temperature of between 60°C and 220°C.

17. A process as claimed in claim 14, wherein the allyl alcohol corresponding to the OH equivalents of the diallylester of general formula (II) is eliminated by operating under partial vacuum at a minimum pressure of 100 mmHg and a temperature of between 80°C and 180°C for a time of between 30 minutes and 8 hours.

18. A process as claimed in claim 14, wherein a part of the compound of general formula (II) is removed under vacuum at a temperature of between 100°C and 160°C until the concentrations of the resin A) of general formula (I) and of the diallylester B) of general formula (II) satisfy the aforesaid A/B weight ratio.

19. A process as claimed in claim 18, wherein the diallylester B) is removed either by distillation under vacuum or by liquid film evaporation.

20. Articles of high refractive index obtained by thermal crosslinking of the liquid compositions of claims 1 to 13.
